# EUROPEAN PATENT APPLICATION

(11) **EP 1 906 109 A1**
(43) Date of publication of application: **02.04.2008**
(21) Application number: 06761323.2
(22) Date of filing: 27.06.2006
(51) Int. Cl.: F24H 1/18, F24D 11/02, F24J 2/00

(54) **METHOD FOR PRODUCING HOT WATER UTILIZING COMBINED HEAT RESOURCES OF SOLAR ENERGY AND HEAT PUMP IN THE MANNER OF HEATING WATER AT MULTIPLE STAGES AND ACCUMULATING ENERGY AND A DEVICE ESPECIALLY FOR CARRYING OUT THE METHOD**

(30) Priority: 28.06.2005 CN 200510027212
(71) Applicant: Pan, Ge, Shanghai 200030 (CN)
(72) Inventor: Pan, Ge, Shanghai 200030 (CN)
(74) Representative: Schwahn, Hartmut
(86) International application number: PCT/CN2006/001476
(87) International publication number: WO 2007/000112

(57) **Abstract**

A method for producing hot water and a device especially for carrying out the method are provided. The method utilizes combined heat resources of solar energy and heat pump in the manner of heating water at multiple stages and accumulating energy. The device comprises a solar energy collector, a heat pump, an electrical heater, a water tank, and a control unit. The device also includes water-heating tanks with multiple stages. A heating means with multiple stages at different temperatures is formed either by the solar energy collector or by the collector and the heat pump. The outputting end of the two or more heating stages constituted by the solar energy collector or by the collector and the heat pump is connected through ducts to the corresponding water-heating tanks. A predetermined amount of produced water heated at multiple stages is respectively stored in the water-heating tanks. Compared with the prior art, the present invention is endowed with the performance of making use of the solar energy to the greatest extent and utilizing off-peak electricity more efficiently as a supplementary heating means. Furthermore, the arranging fee of the device is reduced and its adaptation of mounting is improved.

## Description

### FIELD OF THE INVENTION

The present invention relates to a field of utilizing solar energy, and more particularly to a method for producing hot water utilizing combined heat resources of solar energy and heat pump in a manner of heating water at multiple stages and accumulating energy and a device especially for carrying out the method.

### BACKGROUND OF THE INVENTION

The sun generates a large amount of energy. The radiant energy reaching the earth's surface from the sun each year equals to the energy generated by about 130 trillion tons of standard coals, but it is still dispersal, discontinuous, and unstable. Although the total amount of solar radiant energy reaching the earth's surface is great, its energy-flux density is very low. So a large area is needed to receive the radiation in order to get a certain radiant power. The discontinuance and instability means that the solar radiant energy is restricted by natural conditions such as days and nights, seasons, geographical latitudes, altitudes above sea level, as well as random factors such as clear, gloomy, cloudy, and rainy days. To eliminate these defects, an energy accumulation problem shall be solved and other auxiliary energies are needed to make sure that solar energy can be used round the clock. The energy used for building, such as for producing hot water, can be generated by low-ordered renewable energy sources; otherwise, it would be a waste of power if the high-ordered electric energy is used. Therefore, one of the most important indexes for a solar water heating system is to make sure that the solar energy can be used to the maximum extant and that the system effectively stores the energy. Meanwhile, the output temperature of the hot water must be maintained above 45°C (which meets the industrial standard), and the heat water can be used round the clock in all weathers. In short, it must be at least guaranteed that the hot water above 45°C can be supplied for 24 hours a day and 365 days a year, and if possible, it must be guaranteed that the heated water at a secondary temperature, e.g., 30°C-40°C can be supplied for 24 hours a day and 365 days a year. Then, if an electrical heater is used, the off-peak electricity must be fully made use by the device to make sure that the running cost is the lowest. Besides, the arranging cost of the device can be reduced and meanwhile the adaptation for mounting the device is enhanced, which is further helpful for combining the device with the building integrally.

According to the prior art, there are two main technical means to solve the energy accumulation problem for a solar water heating system: one is to enlarge the volume of the energy accumulation water tank; the other is to increase the energy accumulation density per unit of the energy accumulation medium. In terms of the first solution, the published CN1403760A "Energy System Using Multiple Complementary Energies" provides a technical solution to supply hot and cool water using a solar energy collection and other complementary energies together with an energy accumulation water tank. The energy accumulation water tank includes a hot water chamber and a cold water chamber, which are separated apart by a heat-insulating material. The solar energy collecting system and a ground source heat pump system are connected to the energy accumulation water tank respectively. As shown in accompanying figures, the production and consumption of hot water in this solution is of a real-time mode. When a certain amount of hot water is output, the same amount of cold water needs to be input therein to make sure the heat exchange between the solar energy collector and the heat storage water tank goes on well. Since the cold water will be input at any time, it is impossible to supply a certain amount of hot water above 45°C for 24 hours a day and 365 days a year if a non-heat storage water tank of a normal size is used. Moreover, in sunny days, as the temperature at the upper part of the heat storage water tank gradually goes up, the energy collecting efficiency of the solar energy collecting system declines gradually from noon. Therefore, the overall thermal performance of the system is quite low. If the energy is accumulated by means of enlarging the volume of the heat storage water tank, the water in the lower part always has a low temperature, which does not make sufficient contributions for the everyday output of hot water. Besides, the water at a lower temperature gets bacteria more easily, and gets the supplied water being polluted. Furthermore, the hot water can be easily mixed with the cold water if no separation and heat preservation technique is used, so the water in the upper part of the tank does not easily reach the required output temperature, and the water tank is too large to be fully utilized. In addition, the hot water chamber and the cold water chamber are arranged independently for seasonal use, which reduces the application rate greatly, but increases the arranging fee.

The feature of auxiliary heating using the electric heat pump technology is energy saving. Its power consumption is 1/3, or even lower, of the common electrical heating elements with the same thermal-electrical efficiency. However, the efficiency of the electric heat pump is limited by the required temperature and the temperature range of the hot source, and it will be frosted below the critical temperature. If the temperature difference in heating is too large, it will be easily damaged. Moreover, it's preferred to use off-peak electricity to produce hot water with the electric heat pump, as the electrical power is in shortage.

To solve the above problems, the applicant brings forward a water-heating device using solar energy collection and electrical heating in China Invention Patent Application No. 200510025652.1, in which the water-heating device includes a solar energy collector, a heat pump, and an electrical heating element. A certain amount of hot water produced by the solar energy collector, the heat pump, or the electrical heating element is stored in a water tank, such that the hot water is stored and supplied in a timesharing mode, so as to ensure that the hot water above 45°C is supplied for 24 hours a day and 365 days a year, and that the solar energy can be utilized to the maximum extent and only the off-peak electricity is used. However, the water-heating device in this technical solution still has some problems, for example, the solar energy cannot be fully utilized when the area for installing the solar energy collector is limited, and meanwhile, the heat pump must be used to make up the insufficient part where the solar energy is insufficient. So the great amount of cheap energy such as the off-peak electricity is needed. However, it is difficult to get sufficient off-peak electricity at night for family users whose lead-in current capacity is fixed. Meanwhile, the water tank must be relatively large to realize the effects of accumulating the energy and reducing the cost, which increases the arranging fee for the water-heating device. For a large-scale concentrated water-heating device, enlarging the volume of the water tank not only increases the arranging fee, but also brings the problems of mounting on the roof and support capacity of the mounting surface. Moreover, the area for mounting the solar energy collector is reduced, so the adaptation of mounting is affected.

### SUMMARY OF THE INVENTION

A main object of the present invention is to provide a method for producing hot water utilizing combined heat resources of solar energy and a heat pump in a manner of heating water at multiple stages and accumulating energy, so as to produce hot water by utilizing solar energy, a heat pump or an electrical heater in a timesharing mode. Upon meeting the requirements of supplying hot water at or above 45°C for 24 hours a day and 365 days a year, the solar energy is utilized to the maximum extent before using the energy of the heat pump or the off-peak electricity. Therefore, a predetermined amount of water is produced at a lowest cost in a manner of heating at multiple stages, which is used for energy accumulation and supplying of hot water at different temperature levels in the timesharing mode. If the mounting area for the collector is inadequate, an output water temperature for the collector can be set to a secondary level to enhance the collecting efficiency, which also solve the problem of load distribution caused by mounting water tanks on the roof collectively, reduce the arranging fee, and expand the adaptation of mounting.

Another object of the invention is to provide a device especially for carrying out the heating method. The device is a combination of heating structures working in a timesharing mode, including a solar energy collector, a heat pump, an electrical heater, a water tank, and a control unit. Upon meeting the requirements of supplying hot water at or above 45°C for 24 hours a day and 365 days a year, the solar energy is utilized to the maximum extent before using the energy source of the heat pump or the off-peak electricity. Therefore, a lowest cost is achieved by heating water at multiple stages, and the hot water produced by heating in advance and by heating at multiple stages in a timesharing mode is used for energy accumulation and supplying water in the timesharing mode according to different temperature level settings. If the mounting area for the collector is inadequate, an output water temperature of the collector can be set to a secondary level to enhance the collecting efficiency, which enables the energy accumulation water tanks to be arranged separately, reduces the arranging fee, and expands the adaptation of mounting.

The method for producing hot water utilizing combined heat resources of solar energy and heat pump in a manner of heating water at multiple stages and accumulating energy of the present invention is realized through the following technical solutions. The method for producing hot water utilizing combined heat resources of a solar energy and a heat pump in a manner of heating water at multiple stages and accumulating energy includes a process of heating with a solar energy collector, a process of heating with a heat pump, and a process of heating with an electrical heater. The process of producing hot water is a combination of heating water in a circulating water-heating tank for the collector of multi-stage heating and in a conflux hot water tank of multi-stage heating at multiple stages with the solar energy collector, the heat pump, and the electrical heater simultaneously or respectively. The production and consumption of hot water is of a timesharing mode, that is, a certain amount of hot water produced by heating periodically at multiple stages can be produced in advance and stored in the conflux hot water tank of multi-stage heating and in an energy accumulation water tank for being supplied in the timesharing mode for a next period. The combination of heating the water in the circulating water-heating tank for the collector and in the conflux hot water tank of multi-stage heating at multiple stages with the solar energy collector, the heat pump, and the electrical heater simultaneously or respectively includes: completely utilizing the solar energy collector for heating and storing the hot water in sunny days; using the heat pump or the electrical heater for complementarily heating and storing the hot water at night when off-peak electricity is available; using the heat pump for instant heating and storing the hot water according to a required certain amount of hot water storage volume when it is not sunny day and the off-peak electricity is not available as well.

The device especially for carrying out the method for producing hot water utilizing combined heat resources of a solar energy and a heat pump in a manner of heating water at multiple stages and accumulating energy of the present invention is realized through the following technical solution. The device especially for carrying out the method for producing hot water utilizing combined heat resources of a solar energy and a heat pump in a manner of heating water at multiple stages and accumulating energy comprising at least one solar energy collector, a water pump, at least one heat pump, at least one electrical heater, at least one water tank, and a control unit, wherein said water tanks comprises a circulating water-heating tank for the collector, a conflux hot water tank of multi-stage heating, and a energy accumulation water tank, wherein the solar energy collector is connected to the circulating water-heating tank for the collector, the circulating water-heating tank for the collector is connected to the conflux hot water tank of multi-stage heating, and the conflux hot water tank of multi-stage heating is connected to the energy accumulation water tank; the heat pump and the electrical heater are arranged with the water tanks; a start control of the solar energy collector, the water pump, and the heat pump, and the electrical heater are electrically connected to the control unit respectively. The energy accumulation water tank has more than one water tanks, including a warm water storage tank of multi-stage heating and a final temperature water storage tank; the conflux hot water tank of multi-stage heating, the warm water storage tank of multi-stage heating, and the final temperature water storage tank are connected in parallel. The device can include one or more circulating water-heating tanks for the collector, and the last one of the interconnected one or more circulating water-heating tanks for the collector can also be used as the conflux hot water tank of multi-stage heating. When the heat pump and the electrical heater are arranged with the water tanks, the heat pump or the electrical heater is disposed on and outside the water tanks of multi-stage heating. The device can include one or more heat pumps disposed on the conflux hot water tank of multi-stage heating and the final temperature water storage tank or disposed there-between to form heat pumps for heating at multiple stages, and the heat pumps for heating at multiple stages can be directly or indirectly connected in series. The warm water storage tank of multi-stage heating and the final temperature water storage tank are connected to bypass pipelines in parallel, and the bypass pipeline has a one-way valve through which the warm water storage tank of multi-stage heating supplies or heats the water to the final temperature water storage tank. Electrical control valves are disposed in the water pipes connected in parallel between the conflux hot water tank of multi-stage heating, the warm water storage tank of multi-stage heating, and the final temperature water storage tank. A connecting pipe for discharging water is disposed on both the warm water storage tank of multi-stage heating and the final temperature water storage tank, and a hot water booster pump can be further disposed on the connecting pipe for discharging water.

The advantages of the method for producing hot water utilizing combined heat resources of solar energy and heat pump in a manner of heating water at multiple stages and accumulating energy of the present invention are described as follows. Due to the adopted process of producing hot water can be a combination of heating the water in the circulating water-heating tank for the collector and in the conflux hot water tank of multi-stage heating at multiple stages with the solar energy collector, the heat pump, and the electrical heater simultaneously or respectively, in which the production and consumption of hot water is of a timesharing mode, that is, a certain amount of hot water produced periodically by heating at multiple stages can be produced in advance and stored in the conflux hot water tank of multi-stage heating and in the energy accumulation water tank for being supplied in a timesharing mode for a next period. Therefore, the device can completely utilize the solar energy collector for heating and storing the hot water in sunny days, use the heat pump for heating and storing the hot water according to a required certain amount of hot water storage volume when it is not sunny day and the off-peak electricity is not available as well, and use the heat pump or the electrical heater for complementarily heating and storing the hot water at night when off-peak electricity is available. The certain amount of produced hot water can be stored in the water tank of multi-stage heating and the energy accumulation water tank respectively after being heated at multiple stages, so as to ensure that solar energy is utilized to the maximum extent before using the energy source of the heat pump or off-peak electricity for heating, such that a higher solar energy utilization rate and a lower running cost compared with the prior art are achieved, and thus ensuring that the hot water output from the device meets the requirements of supplying waters at or above 45°C for 24 hours a day and 365 days a year. Besides, the hot water produced by heating at multiple stages in the timesharing mode can be stored and supplied at different temperature levels in the timesharing mode, so the volume of the energy accumulation water tank can be reduced substantially, which thus further solves the problem of load distribution caused by mounting water tanks on the roof collectively. If the mounting area for the solar energy collector is inadequate, the collector can be set to a secondary output temperature to enhance the collecting efficiency. Compared with the prior art, the arranging fee is reduced significantly, and the adaptation of mounting is improved.

The advantages of the device especially for carrying out the method of the present invention are described as follows. Due to the adopted water tanks include the circulating water-heating tank for the collector, the conflux hot water tank of multi-stage heating, and the energy accumulation water tank, in which the solar energy collector is connected to the circulating water-heating tank, and the circulating water-heating tank is connected to the conflux hot water tank, the heat pump and the electrical heater are arranged with the water tanks, and the start control of the solar energy collector, the water pump, and the heat pump and the electrical heater are electrically connected to the control unit respectively. As the water tank of multi-stage heating and the multi-stage heating setting described above are adopted, upon meeting the requirements of supplying hot water above 45°C for 24 hours a day and 365 days a year, the device utilizes the solar energy to the maximum extent before using the energy source of the heat pump and the off-peak electricity for heating, so as to achieve the lowest cost. The hot water produced by heating in advance in a timesharing mode and by heating at multiple stages can be stored and supplied in a timesharing mode according to different temperature level settings. Furthermore, as the conflux hot water tank of multi-stage heating is connected to the energy accumulation water tank, the predetermined amount of hot water produced can be stored in the water tank of multi-stage heating and the energy accumulation water tank respectively after being heated at multiple stages. Moreover, since the energy accumulation water tank can be mounted separately, the volume of the energy accumulation water tank is significantly reduced, and meanwhile, the adaptation for mounting the hot water device is improved. If the mounting area for the solar energy collectors is inadequate, the output water temperature of the collectors is set at the secondary water temperature to enhance the collecting efficiency, so the solar energy utilization ratio becomes higher and the running cost becomes lower compared with the prior art, and the arranging fee for the device is also significantly reduced.

The process of utilizing the method for producing hot water and the device especially for carrying out the method of the present invention and the beneficial effects thereof are described below by means of comparing with the prior art. In the prior art, the solar energy collection and the ground source heat pump are taken as auxiliary energies, and both of them are used to supply heating and cooling after being connected to the energy accumulation water tank; the energy accumulation water tank includes a hot water chamber and a cold water chamber separated apart by a heat-insulating material. Therefore, the production and consumption of hot water according to the prior art are of a real-time mode, which cannot meet the requirements of supplying the rated amount of hot water above 45°C for 24 hours a day and 365 days a year. Though the ground source heat pump for auxiliary heating is energy saving, as the volume of the hot water chamber in the energy accumulation water tank is too large, and the supply of water is relied on instant heating when it is not a sunny day but cloudy or rainy, such electrical heating process mainly uses the high-price peak electricity, which makes the power consumption structure unreasonable. Furthermore, since the heat storage water tank of a larger volume is used to accumulate energy, the temperature of water in the lower half of the heat storage water tank is always relatively low, in addition to easily getting bacteria and polluting the output water, the hot water can be easily mixed with the cold water as the above two heating processes are adopted, and thus, the water producing efficiency is reduced, the energy accumulation effect is affected, and a part of the effective heat storage volume for the water tank is wasted. In addition, the hot water chamber and the cold water chamber are arranged independently for seasonal use, so the utilization rate is lowered greatly, and the arranging fee is too high, which further affects the adaptation of mounting the device on the roof. Moreover, the running cost is relatively high as the thermal efficiency of the collector is affected by temperature rise or limited mounting area.

The production and consumption of hot water of the present invention is of the timesharing mode, that is, the predetermined amount of hot water produced periodically by heating at multiple stages is stored in the conflux hot water tank of multi-stage heating and the energy accumulation water tank for being supplied for a next period in the timesharing mode, i.e., the predetermined amount of hot water produced in advance is stored in the energy accumulation water tank for being supplied at different temperatures in the timesharing mode, which merely ensures supplying hot water at a fixed temperature in the timesharing mode between two off-peak electricity periods in the morning and at night of the next day. The predetermined volume of hot water produced in advance before the off-peak electricity periods are over is the volume of hot water at a fixed temperature required to be supplied in the timesharing mode between two off-peak electricity periods in the morning and at night of the next day, which occupies 80%-90% of the capacity of the final temperature water storage tank. Between the two off-peak electricity periods in the morning and at night of the next day, the predetermined hot water periodically produced by heating at multiple stages is repeatedly produced in advance and stored in the conflux hot water tank of multi-stage heating and the energy accumulation water tank for being supplied for a next period in the timesharing mode. Compared with the prior art, the present invention completely solves the problems relevant to accumulating the energy and reducing the running cost.

Because the water tanks include the circulating water-heating tank for the collector of multi-stage heating, the conflux hot water tank of multi-stage heating, and the energy accumulation water tank, the final temperature hot water is stored alone, so the hot water and cold water cannot be mixed, and the effective heat storage volume of the water tanks is relatively large, which avoids being wasted. Another advantage of disposing the conflux hot water tank of multi-stage heating lies in that, the circulating heat collection pipelines between the solar energy collector in the front and the circulating water-heating tank are greatly shortened, so the flow resistance of the heat exchange cycle is reduced substantially; the circulation heat collection pipelines between the circulating water-heating tank for the solar energy collector and the conflux hot water tank of multi-stage heating are replaced by top water single-pipe flow-down gap transmission mode, so the heat loss for the heat preservation of the heat collection pipelines in the hot water circulation transmission then is eliminated. Therefore, the thermal efficiency of the device is significantly improved, which is higher than the heat collection and heat transmission efficiencies of the prior art that uses the solar energy collector for heating.

The start control of the solar energy collector, the water pump, and the heat pump and the electrical heater are electrically connected to the control unit respectively, the solar energy collector is connected to the circulating water-heating tank for the collector of multi-stage heating, the circulating water-heating tank is connected to the conflux hot water tank of multi-stage heating, the conflux hot water tank is connected to the energy accumulation water tank, the heat pump and the electrical heater are arranged with the water tanks. Therefore, on sunny days, the device completely utilizes the solar energy collector to heat and store hot water, the water in the circulating water-heating tank for the collector of multi-stage heating is heated by the solar energy collector; during the off-peak electricity period at night, the heat pump is used for complementarily heating and storing the warm water in the water tanks by heating at multiple stages, or the electrical heater including an electric heat pump is preferentially used for heating; in winter, when the environmental temperature is too low that the heat pump cannot operate normally, an electrical heating element can be used to replace the electric heat pump, and moreover, the electric heat pump or the electrical heater can also be used sufficiently for heating under the power during the off-peak electricity period at night, so as to balance the loads in peak and off-peak electricity periods of the existing electric network. Compared with the prior art, the present invention can meet the requirements of supplying hot water above 45°C for 24 hours a day and 365 days a year.

In addition, if the mounting area of the solar energy collector is inadequate, with the above multi-stage heating setting, the working temperature of the collector can be set as the secondary water output temperature, the heat pump is then used for complementary heating, and thus, the efficiency of the collector is improved to compensate the insufficiency for the mounting area of the collector. Compared with the prior art, the present invention achieves a higher solar energy utilization rate, and a higher utilization rate of the off-peak electricity for complementary heating. After adopting the multi-stage heating setting, the volume of a single water tank is reduced, and can be mounted at a position other than the roof. Compared with the prior art, the present invention can solve the problem of the supporting capability of the roof and can avoid influencing the appearance of the roof, and more space previously occupied by the water tanks on the roof is vacated for the solar energy collector, and thus, the arranging fee of the device is reduced, and the adaptation for mounting the water-heating device is improved.

As the conflux hot water tank of multi-stage heating is connected to the energy accumulation water tank, and the energy accumulation water tank includes a warm water storage tank of multi-stage heating and a final temperature water storage tank arranged up and down and connected in parallel. Compared with the prior art, the present invention can store and supply hot water at a secondary temperature of 30°C-40°C for daily washing. In winter, the hot water of above 45°C can be stored, and the warm water cannot reach the required final temperature can be recycled. In summer, the warm water storage tank of multi-stage heating can be converted to the final temperature water storage tank for storing extra heats. Therefore, the present invention realizes the feature of giving priority to achieving maximum thermal efficiency in winter while achieving maximum heat storage capability in summer. As the hot water storing capability of the device is almost doubled, after sunset, the device still has sufficient storage capacity to accommodate warm water sufficient for being discharged from the solar energy collector, the circulating water-heating tank for the collector, and the conflux hot water tank of multi-stage heating, so the heating and heat exchanging efficiency for the solar energy collector in the next day is not influenced, and thus, the device can utilize the solar energy to the maximum extent to reduce the running cost. Compared with the prior art, the device of the present invention has a higher heat collection efficiency, and an increased capability of outputting hot water at different temperatures.

Furthermore, since the device is disposed with the warm water storage tank of multi-stage heating, it can store the water at the secondary or final temperature. In this way, for urgent need, the heat pump can be used for instant heating and energy accumulation according to the predetermined hot water storage volume setting in the peak electricity period without sunshine, so as to supplement or heat and supply water to the final temperature water storage tank, and thus, it is ensured that the hot water above 45°C is supplied for 24 hours a day and 365 days a year at the lowest running cost, which exceeds the capability of the prior art. Therefore, the techniques of the present invention have substantial improvement and progress compared with the prior art.

### BRIEF DESCRIPTION OF THE DRAWINGS

FIG 1 is a schematic structural view of a device according to a first embodiment of the present invention.
FIG 2 is a schematic structural view of a device according to a second embodiment of the present invention.
FIG 3 is a schematic structural view of a device according to a third embodiment of the present invention.
FIG 4 is a schematic structural view of a device according to a fourth embodiment of the present invention.

### DETAILED DESCRIPTION OF THE INVENTION

The method for producing hot water utilizing combined heat resources of a solar energy and a heat pump in a manner of heating water at multiple stages and accumulating energy and the device especially for carrying out the method of the present invention are further illustrated below with reference to the embodiments.

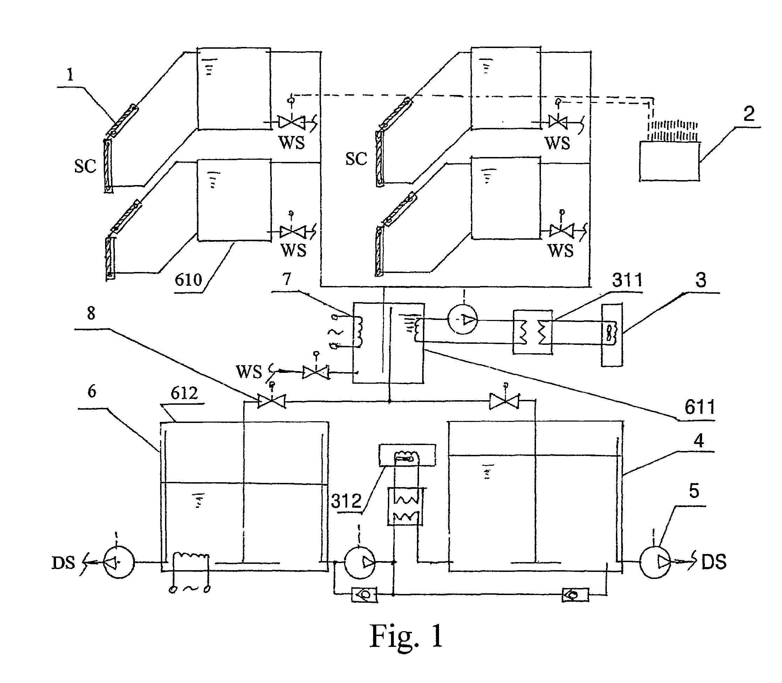

FIG. 1 is a schematic structural view of a device according to a first embodiment of the present invention, which includes at least one solar energy collector 1, a control unit 2, at least one heat pump 3, at least one water tank 4, at least one booster pump 5, at least one water-heating tank 6, at least one electrical heater 7, and at least one electric control valve 8.

The water-heating tank 6 is a water tank for heating at multiple stages formed by two or more multi-stage heating water tanks 611 and 612. The multi-stage heating water tank 611 is a conflux hot water tank of multi-stage heating, and the multi-stage heating water tank 612 is a warm water storage tank of multi-stage heating. The multi-stage heating water tank 611 includes a circulating water-heating tank for the collector of multi-stage heating 610 and the conflux hot water tank of multi-stage heating 611. The hot water tanks of multi-stage heating 611 and 612 are mounted in front of the final temperature water storage tank 4. The tanks are arranged sequentially according to the temperature of the heating stages, that is, the circulating water-heating tank 611 with a lower heating temperature is positioned in front, 612 with a slightly higher heating temperature is in the back, and the circulating water-heating tanks 611 and 612 are connected to the final temperature water storage tank via pipelines. Combined water tanks capable of accumulating energy and heating as published in CN2544229Y formed by a water heating tank and a heat storage water tank can also be applied as the water tanks herein.

The solar energy collector 1 and the heat pump 3 can form a multi-stage heating unit of different temperatures. The multi-stage heating output of the multi-stage heating unit formed by the solar energy collector 1 and the heat pump 3 is connected to the corresponding multi-stage heating water tank 6 via pipelines. The electrical heater includes an electrical heating element and an electric heat pump. The multi-stage heating water tank can include the electrical heating element 7. The solar energy collector, the water tank, the water pump, the water-heating tank, the start control of the heat pump, the electric control valve, and the electrical heating element are electrically connected to the control unit 2 respectively. A predetermined amount of hot water produced by heating at multiple stages is stored in more than one energy accumulation water tanks, including the warm water storage tank 612 of multi-stage heating and the final temperature water storage tank 4.

The multi-stage heating hot water tank further include the circulating water-heating tank 610 for the collector of multi-stage heating and the conflux hot water tank 611 of multi-stage heating. The secondary warm water heated by the solar energy collector passes through several circulating water-heating tanks 610, then flows into the conflux hot water tank 611 to become the final temperature hot water of 45°C, which is then supplied to the final temperature water storage tank 4 for storage via the electrical control valve 8 and the pipelines as shown in FIG. 1. Alternatively, when the final temperature water storage tank is full, the water of the final temperature or the secondary temperature flows into the warm water storage tank 612 for backup through the electrical control valve 8 and the pipelines connected in parallel, and it can be further heated by the heat pump whenever necessary and then flow into the final temperature water storage tank 4 for storage through the bypass heating pipe of the heat pump shown in FIG. 1. If the solar energy is insufficient or the mounting area for the solar energy collector is not adequate, the temperature of the hot water output from the collector can be set to about 30°C-40°C, then the water flows into the warm water storage tank 612 for storage, or output to the final temperature water storage tank 4 for storage after being heated by the heat pump. For this reason, the warm water storage tank and the final temperature water storage tank 4 both include connecting pipes and the booster pump 5 for outputting the hot water, and the warm water storage tank supplies hot water to the final temperature water storage tank as a supplementary via a one-way valve, or directly supplies the hot water of a final temperature to the final temperature water storage tank after the water is heated by a heat pump in the back.

The heat pump 3 is an air source heat pump using the heat in the air as the heat source. In addition, the heat pump 3 can also be other different heat pumps such as a water source heat pump, a ground source heat pump, or any combination thereof, for example, a combination of a water source heat pump using wastewater discharged from living and building districts as the heat source and an air source heat pump. The heat pump 3 includes one or more heat pumps of multi-stage heating, and two heat pumps of multi-stage heating 311 and 312 are used here, both of which are disposed between the multi-stage heating water tank and the final temperature water storage tank, e.g., at a position on or outside the multi-stage heating water tank. The heat pump 311 in the front is connected to the conflux hot water tank 611, the heat pump 312 in the back is connected to the warm water storage tank 612 first and then to the final temperature water storage tank. The two heat pumps of multi-stage heating are indirectly connected in series as shown in FIG. 1. In addition, the heat pumps can be connected directly or indirectly with one another in parallel. According to the design, the predetermined amount of produced hot water accounts for about 80%-90% of the total volume of the warm water storage tank of the secondary output or of the final temperature water storage tank. Moreover, output circulating pipelines of the heating or air conditioning unit can be connected between the multi-stage heating water tanks via heat exchangers.

The solar water-heating device mainly composed of the solar energy collector includes heat exchange circulation pipelines connected in a manner of direct flow, circulating reflux, or a combination thereof. Here, the natural circulating reflux pipeline connection is used. The process of producing hot water is a combination of heating at multiple stages with the solar energy collector, the heat pump, or the electrical heater, including a process of heating with the solar energy collector, a process of heating with the heat pump, and a process of heating with the electrical heater. In sunny days, the solar energy collector is used for heating; at night when the off-peak electricity is available, the heat pump is used for heating; when it is not sunny day and the off-peak electricity is not available, different heat pumps are chosen for heating and energy accumulation according to the predetermined amount of hot water storage volume; in winter nights when the off-peak electricity is available but the environmental temperature is too low for the heat pump to run normally, the electrical heater is used for heating. In addition, if there is no electricity supply, gas heating, e.g., by a gas heat pump, can be used to replace the electric heating by the electrical heater to form a combination.

The predetermined amount of hot water periodically produced by heating at multiple stages will be produced in advance, and stored in the conflux hot water tank and the energy accumulation water tank for being supplied in a timesharing mode. The volume of the predetermined amount of hot water produced periodically by heating at multiple stages refers to the volume of hot water at a predetermined temperature that needs to be supplied in the timesharing mode between two off-peak electricity periods in the morning and at night of the next day. The predetermined temperature is the temperature of the output hot water specified in technical standards on solar water heating devices which the present invention is applied. In the applicable district of China, the temperature of output hot water is 45°C according to the current new technical standard. In addition, through the warm water storage tank 612, the water-heating device can also supply warm water at the secondary temperature of 30°C-40°C for daily washing for 24 hours a day and 365 days a year. The two water tanks for storing the predetermined amount of hot water both include temperature and water level sensors, so as to control and manage the stored water with the control program of the control unit 2.

The solar energy collector 1 is a three-dimensional solar energy collector that can be mounted on a wall, and through using the technical solution of CN2558931Y, the damages to the appearance of buildings can be prevented, and meanwhile, the vertically-mounted collector can guarantee long-term and steady output of heats at a high efficiency once being vertically mounted on a wall, which is the critical point in terms of vertically mounting the collector on the wall. The three-dimensional solar energy collector can be mounted vertically, slantingly, horizontally, or in a combination of the above mounting modes. Here, the combination of vertical and slanting mounting modes is adopted.

The water tanks include the heating water tank and the heat storage water tank, which can include or not include energy accumulation materials. In addition to normal water tanks with a single volume, the parallel-connected water tanks for volume water heaters can also be used, the details are described in CN2656881Y, "Parallel Connected Water Tank for Volume Water Heater".

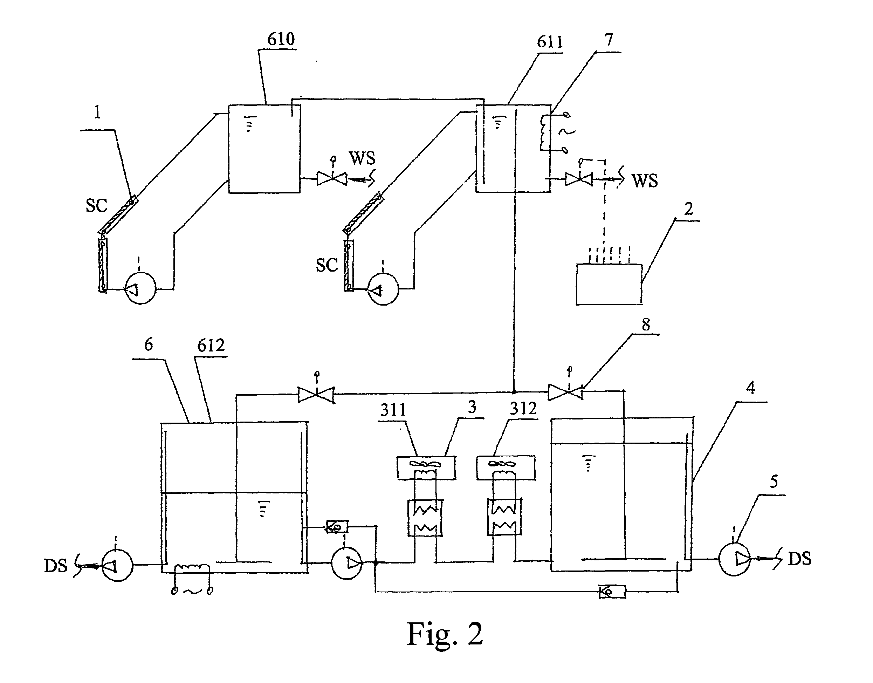

FIG 2 is a schematic structural view of a device according to a second embodiment of the present invention, which includes at least one solar energy collector 1, a control unit 2, at least one heat pump 3, a final temperature water storage tank 4, a booster pump 5, at least one water-heating tank 6, at least one electrical heating element 7, and at least one electric control valve 8. In FIG. 2, multi-stage heating units of different temperatures are formed between the solar energy collector 1 and the heat pump 3, and meanwhile, two multi-stage heating outputs formed by the multi-stage heating units of the solar energy collector are connected to corresponding multi-stage heating water tanks 610 and 611 via pipelines. The multi-stage heating water tank includes the electrical heating element 7. The multi-stage heating outputs formed by the multi-stage heating units of different temperatures constituted by the solar energy collector and the heat pump are connected to the corresponding multi-stage heating water tank 6 via pipelines.

The multi-stage heating outputs include the output of circulating heating the multi-stage heating water tank and the output of directly heating the output of the multi-stage heating water tank. The solar energy collector, the water tank, the water pump, the water-heating tank, the heat pump, and the electrical heater are electrically connected to the control unit 2 respectively. The predetermined amount of produced hot water is heated at multiple stages, and then separately stored in the warm water storage tank 612 and the final temperature water storage tank 4.

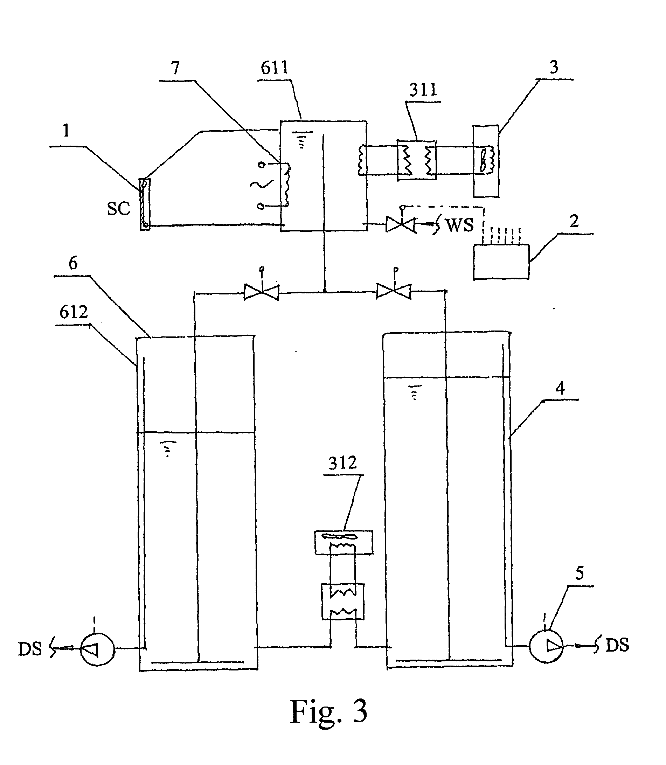

The water tank is a combined water tank for energy accumulation and heating formed by the water-heating tank and the heat storage water tank. The water-heating tank 6 is a multi-stage heating water tank composed of three multi-stage heating water tanks 610, 611, and 612. The warm water storage tank of multi-stage heating is disposed in front of the final temperature water storage tank or the heat storage water tank 4. There can be one ore more circulating water-heating tanks for the collector as shown in FIGs. 2 and 3. When a plurality of circulating water-heating tanks for the collector is connected in series, the last circulating water-heating tank 611 can function as the conflux hot water tank of multi-stage heating as well. The circulating water-heating tanks 610 and 611 for the collector of multi-stage heating are used to form a multi-stage heating unit with each other between the solar energy collectors, and further used to form another multi-stage heating unit with the heat pump 3. These units are arranged according to a sequence of the temperature for the multi-stage heating, i.e., the heating unit with a lower heating temperature is disposed in the front, and the heating unit with a slightly higher temperature is disposed in the back. The multi-stage heating water tanks 611 and 612 are connected to the final temperature water storage tank respectively via pipelines.

The primary hot water heated by the solar energy collector first flows into the circulating water-heating tank 610 for the collector of multi-stage heating, and then flows into the circulating water-heating tank for the collector of multi-stage heating or the conflux hot water tank 611, where the water is heated again by the heat pump or the electrical heater to reach the final temperature, and thus, the hot water of the final temperature is stored in the final temperature water storage tank 4. When the final temperature water storage tank 4 is full, the water is set to the final temperature or the secondary temperature and sent to the warm water storage tank 612 for backup. At this time, the warm water storage tank can be converted to the final temperature water storage tank, so the hot water storage capacity of the device is almost doubled, and the water can also be re-heated by the heat pump at any moment and sent to the final temperature water storage tank 4 for storage. For this reason, both the warm water storage tank 612 and the final temperature water storage tank 4 can include the connecting pipes and the booster pump 5 for outputting the hot water. The hot water in the warm water storage tank 612 can be supplied to the final temperature water storage tank via bypass pipelines and one-way valves connected in parallel, or heated by the heat pump at the back, and then, the hot water at the final temperature is supplied to the final temperature water storage tank.

The heat pump 3 includes one or more heat pumps of multi-stage heating. Here, two heat pumps of multi-stage heating 311 and 312 directly connected in series are used, or a two-stage heat pump can be used as an equivalent. In this manner, the hot water of the final temperature can be produced by heating at multiple stages using the off-peak electricity directly in winter. Furthermore, if the electric heat pump cannot normally work because of the low temperature in winter, the electrical heating element in the hot water tank of multi-stage heating can be used to replace the manner of multi-stage heating. All of the heat pumps of multi-stage heating are disposed between the warm water storage tank 612 and the final temperature water storage tank 4.

The solar energy collector 1 is mounted by means of a combination of vertical and slanting mounting modes. For example, most solar energy collectors are mounted vertically to the wall, and others are mounted slantingly to the wall. Besides the solar energy collectors, the solar water heating device also includes heat exchange circulation pipelines connected in a forced circulating reflux mode. The solar energy collector 1 forms multi-stage heating units of different temperatures, for example, two different temperatures, which are connected in series as shown in FIG. 2. The collector with a lower temperature output is disposed in the front, and the collector with a slightly higher temperature output is disposed in the back. The hot water after being heated at multiple stages will be directly sent to the final temperature water storage tank 4 for storage. When the solar energy is insufficient, the water flows into the warm water storage tank 612 for backup, and can be reheated by the heat pump and then sent to the final temperature water storage tank 4 for storage.

FIG. 3 is a schematic structural view of a device according to a third embodiment of the present invention, which includes a solar energy collector 1, a control element 2, at least one heat pump 3, a final temperature water storage tank 4, a booster pump 5, at least one heating water tank 6, and at least one electrical heating element 7. In FIG. 3, the solar energy collector 1 and the heat pump 3 can form multi-stage heating units of different temperatures. The multi-stage heating outputs formed by the multi-stage heating units for the solar energy collector and the heat pump are connected to corresponding multi-stage heating water tank 6 via pipelines. The multi-stage heating water tank can include an electrical heating element 7. The solar energy collector, the water tank, the water pump, the water-heating tank, the heat pump, and the electrical heater are electrically connected to the control unit 2 respectively. A predetermined amount of produced hot water is heated at multiple stages and be separately stored in the warm water storage tank 612 and the final temperature water storage tank 4.

The water tank includes a water-heating tank and a heat storage water tank. The water-heating tank 6 is a multi-stage heating water tank formed by two multi-stage heating water tanks 611 and 612 disposed in front of the final temperature water storage tank 4. The circulating water-heating tank 611 with a lower temperature is disposed in the front, and the conflux hot water tank 612 with a slightly higher temperature is disposed in the back. The water tanks of multi-stage heating 611 and 612 are connected to the final temperature water storage tank via pipelines.

The hot water of the final temperature heated by the solar energy collector directly flows into the final temperature water storage tank 4 for storage under the control of the control unit 2. If the solar energy is insufficient or the mounting area of the solar energy collector is not adequate, the secondary hot water produced flows into the warm water storage tank 612 for storage, and can be supplied to the final temperature water storage tank 4 for storage after being further heated by the heat pump.

The heat pump 3 includes two air source heat pumps of multi-stage heating connected in series between the warm water storage tank of multi-stage heating and the final temperature water storage tank. The heat pump of multi-stage heating 311 in the front is connected to the warm water storage tank 611, and the heat pump of multi-stage heating 312 in the back is connected to the final temperature water storage tank.

The solar energy collector 1 is a three-dimensional solar energy collector mounted on a wall vertically, so as to prevent damaging the appearance of buildings. The solar water heating device mainly composed of the solar energy collector includes heat exchange circulation pipelines connected in a natural circulating reflux mode. The predetermined amount of hot water produced in advance is stored in the water tanks for being supplied in the timesharing mode. The two hot water tanks for storing predetermined amount of hot water include the temperature and water level sensors, so as to control and manage the stored water using the control program of the control unit 2. In addition to normal water tanks with a single volume, the parallel-connected water tanks for volume water heaters can also be used, so the water tanks of appropriate sizes and shapes can be used to reduce the space occupied by the water tanks.

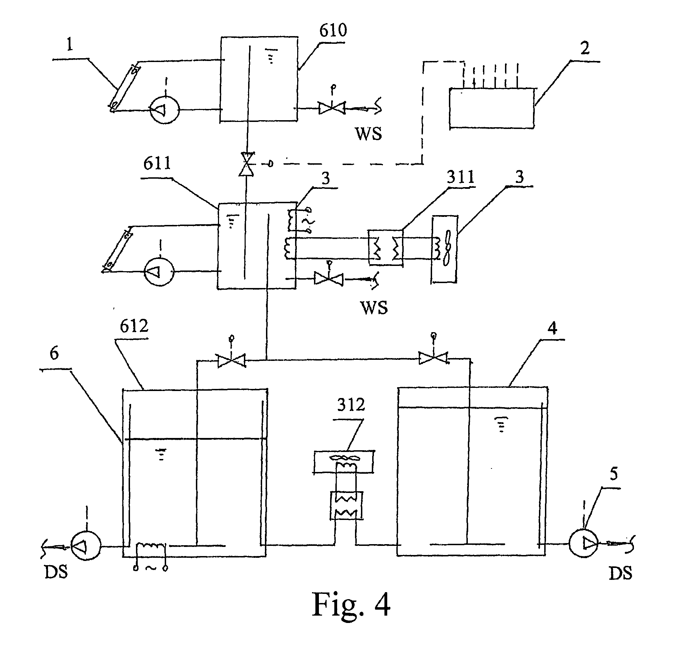

FIG. 4 is a schematic structural view of a device according to a fourth embodiment of the present invention, which includes at least one solar energy collector 1, a control unit 2, at least one heat pump 3, a final temperature water storage tank 4, a booster pump 5, at least one water-heating tank 6, and at least one electrical heater 7. In FIG. 4, the solar energy collector 1 forms a multi-stage heating unit of different temperatures, and meanwhile, the solar energy collector 1 and the heat pump 3 form another multi-stage heating unit of different temperatures. The multi-stage heating outputs formed by both units are connected to the corresponding heat storage water tanks via pipelines through the conflux hot water tank. The multi-stage heating water tanks can include the electrical heating element 7, and the solar energy collector, the water tank, the water pump, the water-heating tank, the heat pump, and the electrical heating element are electrically connected to the control unit 2 respectively. The predetermined amount of hot water produced is heated at multiple stages and then separately stored in the warm water storage tank 612 and the final temperature water storage tank 4.

The solar energy collector 1 is a two-dimensional solar energy collector mounted slantingly. The solar water heating device mainly composed of the solar energy collector includes heat exchange circulation pipelines, which are connected in a manner of direct flow, circulating reflux, or a combination thereof. Here, the forced circulating reflux connection manner is used.

The water tank is a combined water tank for energy accumulation and heating formed by a water-heating tank and a heat storage water tank. The water-heating tank 6 is a multi-stage water-heating tank formed by three circulating water-heating tanks 610, 611, and 612 for the collector. The warm water storage tank of multi-stage heating is disposed in front of the final temperature water storage tank 4. The water tanks are arranged in a sequence according to the temperature of the multi-stage heating, and connected to the final temperature water storage tank via pipelines. The warm water storage tank and the final temperature water storage tank 4 both include the booster pump 5 for outputting the hot water.

The hot water tank of multi-stage heating includes the multi-stage heating water tanks 610 and 611. The primary hot water heated by the solar energy collector flows into the warm water storage tank 612 via the conflux hot water tank 611; then, the hot water is heated to reach the final temperature; and under the control of the control unit 2, the hot water of the final temperature directly flows into the final temperature water storage tank 4 for storage. If the solar energy is insufficient or the mounting area of solar energy collector is not adequate, the produced secondary water flows into the warm water storage tank 612 for storage, and can be supplied to the final temperature water storage tank 4 for storage after being further heated by the heat pump. The predetermined amount of hot water produced in advance is stored in the water tanks for being supplied in a timesharing mode. The two water tanks for storing the predetermined amount of hot water both include the temperature and water level sensors, so as to control and manage the stored water with the control program of the control unit 2.

The heat pump 3 includes two heat pumps of multi-stage heating 311 and 312 disposed between the multi-stage heating water tank and the final temperature water storage tank. The heat pump of multi-stage heating 311 in the front is connected to the conflux hot water tank 611, and the heat pump of multi-stage heating 312 in the back is disposed between the warm water storage tank of multi-stage heating and the final temperature water storage tank. The two heat pumps of multi-stage heating are indirectly connected in series as shown in FIG. 4, and other arrangements are the same as that of the third embodiment of the present invention.

The working process and principles of the present invention are described as follows. In sunny days, the solar energy collector is used to heat the water in the multi-stage heating water tank; in the off-peak electricity period at night, the heat pump is firstly used to heat the water in the multi-stage heating water tank; in winter when the environmental temperature is too lower for the heat pump to run normally, the electrical heating element or the gas heat pump can be used to replace the electric heat pump to heat the water. The predetermined amount of hot water produced in advance is stored in the water tanks for being supplied in the timesharing mode, so as to supply the required amount of hot water at a certain temperature between two off-peak electricity periods in the morning and at night of the next day.

The collector of the solar energy water-heating device absorbs the solar energy and converts it into heats through the circulating heat exchange pipelines and the circulating water tank of multi-stage heating, for heating the water in the water tanks. When in cloudy and rainy day or in winter, the collecting efficiency of the solar energy collector reduces, so the water tank 4 does not have sufficient stored hot water for being supplied in the next period. At this time, the heat pump powered by the off-peak electricity is used for heating the water in the water tank in the off-peak electricity period at night. In the off-peak electricity periods at winter nights, when the environmental temperature is too low for the heat pump to run normally, the electrically heating element in the multi-stage heating water tank is used instead for heating the water. The predetermined amount of hot water produced during the off-peak electricity period can only guarantee the required amount of hot water for being supplied in the timesharing mode between two off-peak electricity periods in the morning and at night of the next day. This amount is only 80%-90% of the volume of the warm water storage tank of multi-stage heating or the final temperature water storage tank, so after the sunset, it still has sufficient storage capacity for accommodating the warm water discharged from the solar energy collector, the circulating water-heating tank for the collector, and the conflux hot water tank of multi-stage heating, and thus, the multi-stage heating efficiency for the solar energy collector in the next day is not influenced. When the final temperature water storage tank is full, the multi-stage heated hot water output from the front is switched to flowing into the warm water storage tank 612 for being stored as the hot water of final temperature. Whenever necessary, the hot water still can be sent to the final temperature water storage tank with a transfer pump via bypass pipelines. Alternatively, if the solar energy is insufficient or the mounting area of the solar energy collector is not adequate, the secondary warm water is first supplied to the warm water storage tank 612 for storage, and it can be heated by the heat pump at any moment or in the off-peak electricity period and then sent to the final temperature water storage tank for storage. If it is not sunny day or if the off-peak electricity is not available, the heat pump is used to heat the water and store the hot water according to the predetermined amount of hot water storage setting. In another aspect, as the circulating water-heating tank for the collector in the front also functions as the conflux hot water tank of multi-stage heating, the warm water storage tank of multi-stage heating 612 and the final temperature water storage tank 4 can be installed indoors or at other positions of a building without affecting the roof for supporting the device, so as to eliminate the disadvantages of mounting on the roof and the restrictions of supporting capacity of the roof. Therefore, more area is saved for mounting the solar energy collector, and the workload and difficulty for mounting the water tank on the roof are greatly reduced. Meanwhile, the influences on the appearance of buildings are significantly lowered, and thus, the application and the adaptation for mounting the water-heating device are greatly improved.

The control unit does not start the heat pump in the back for instant heating the stored water until the hot water in the water tank is insufficient, for example, lower than a corresponding lowest water level setting for a certain period of time, and the temperature of the water stored in the warm water storage tank 612 is also lower than 45°C. In this manner, it is guaranteed to supply hot water over 45°C for 24 hours a day and 365 days a year. Moreover, the water-heating device can also supply the warm water at the secondary temperature of about 30°C-40°C from the warm water storage tank 612. Under the precondition that the solar energy can be utilized to the maximum extent, the heat pump or the electrical heater powered by the off-peak electricity at night is used for heating the water, so as to reduce the load difference between peak and off-peak periods of the electric network.

Moreover, if the mounting area of the solar energy collector is not adequate, as this device uses the multi-stage heating manner, the working temperature of the collector can be set to the secondary output temperature. Therefore, the collector works more efficiently to compensate the insufficient mounting area for the collector. The warm water storage tank of multi-stage heating can store both hot water of the secondary temperature and hot water of the final temperature, so the size of the water storage tank is reduced, and the water storage tank can be separated from the roof, and thus, the problems of the supporting capacity and appearance impacts are solved, and the mounting area for the collector is expanded. Therefore, the arranging fee of the device is reduced and its adaptation of mounting is improved.

## Claims

1. A method for producing hot water utilizing combined heat resources of a solar energy and a heat pump in a manner of heating water at multiple stages and accumulating energy, comprising a process of heating with solar energy collectors, a process of heating with the heat pumps, and a process of heating with an electrical heater, wherein a process of producing hot water is a combination of heating the water in a circulating water-heating tank for the collector of multi-stage heating and in conflux hot water tank of multi-stage heating at multiple stages by the solar energy collector, the heat pump, or the electrical heater simultaneously or respectively; production and consumption of the hot water is of a timesharing mode, i.e., a certain amount of hot water produced in advance by heating periodically at multiple stages is stored in the conflux hot water tank of multi-stage heating and an energy accumulation water tank for being supplied for a next period.

2. The method for producing hot water utilizing combined heat resources of solar energy and heat pump in a manner of heating water at multiple stages and accumulating energy as claimed in claim 1, wherein said combination of heating the water in the circulating water-heating tank for the collector of multi-stage heating and in the conflux hot water tank of multi-stage heating at multiple stages with the solar energy collector, the heat pump, or the electrical heater simultaneously or respectively includes: completely utilizing the solar energy collector for heating and storing the hot water in sunny days; using the heat pump or the electrical heater for complementary heating and storing the hot water at night when an off-peak electricity is available; and using the heat pump for instant heating and storing the hot water according to a required certain amount of hot water storage volume when it is not sunny day and the off-peak electricity is not available as well.

3. A device especially for carrying out a method for producing hot water utilizing combined heat resources of solar energy and heat pump in a manner of heating water at multiple stages and accumulating energy, comprising at least one solar energy collector, a water pump, at least one heat pump, at least one electrical heater, at least one water tank, and a control unit, wherein said water tanks comprises a circulating water-heating tank for the collector, a conflux hot water tank of multi-stage heating, and a energy accumulation water tank, wherein the solar energy collector is connected to the circulating water-heating tank for the collector, the circulating water-heating tank for the collector is connected to the conflux hot water tank of multi-stage heating, and the conflux hot water tank of multi-stage heating is connected to the energy accumulation water tank; the heat pump and the electrical heater are arranged with the water tanks; a start control of the solar energy collector, the water pump, and the heat pump, and the electrical heater are electrically connected to the control unit respectively.

4. A device especially for carrying out a method for producing hot water utilizing combined heat resources of solar energy and heat pump in a manner of heating water at multiple stages and accumulating energy as claimed in claim 3, wherein said energy accumulation water tank has more than one water tanks, including a warm water storage tank of multi-stage heating and a final temperature water storage tank; the conflux hot water tank of multi-stage heating, the warm water storage tank of multi-stage heating, and the final temperature water storage tank are connected in parallel.

5. A device especially for carrying out a method for producing hot water utilizing combined heat resources of solar energy and heat pump in a manner of heating water at multiple stages and accumulating energy as claimed in claim 3, wherein said circulating water-heating tank for the collector has one or more water tanks, and the last one of the interconnected one or more circulating water-heating tanks for the collector also functions as a conflux hot water tank of multi-stage heating.

6. A device especially for carrying out a method for producing hot water utilizing combined heat resources of solar energy and heat pump in a manner of heating water at multiple stages and accumulating energy as claimed in claim 3, wherein when the heat pump and the electrical heater are arranged with the water tanks, the heat pump or the electrical heater is disposed on and outside the water tanks of multi-stage heating.

7. A device especially for carrying out a method for producing hot water utilizing combined heat resources of solar energy and heat pump in a manner of heating water at multiple stages and accumulating energy as claimed in claim 3, wherein said heat pump comprises one or more heat pumps disposed on the conflux hot water tank of multi-stage heating and the final temperature water storage tank and disposed there-between, so as to form heat pumps for heating at multiple stages, and the heat pumps for heating at multiple stages are directly or indirectly connected in series.

8. A device especially for carrying out a method for producing hot water utilizing combined heat resources of solar energy and heat pump in a manner of heating water at multiple stages and accumulating energy as claimed in claim 3, wherein said warm water storage tank of multi-stage heating and the final temperature water storage tank are further connected to bypass pipelines in parallel, and the bypass pipelines have one-way valves for supplying water or heating water from the warm water storage tank of multi-stage heating to the final temperature water storage tank.

9. A device especially for carrying out a method for producing hot water utilizing combined heat resources of solar energy and heat pump in a manner of heating water at multiple stages and accumulating energy as claimed in claim 3 or 4, wherein electric control valves are disposed on water pipes connected in parallel between the conflux hot water tank of multi-stage heating, the warm water storage tank of multi-stage heating, and the final temperature water storage tank.

10. A device especially for carrying out a method for producing hot water utilizing combined heat resources of solar energy and heat pump in a manner of heating water at multiple stages and accumulating energy as claimed in claim 3, wherein a connecting pipe for discharging water is disposed on the warm water storage tank of multi-stage heating and the final temperature water storage tank, and a hot water booster pump is additionally disposed on the connecting pipe for discharging water.
